# EUROPÄISCHE PATENTANMELDUNG

(11) **EP 2 682 653 A1**
(43) Veröffentlichungstag der Anmeldung: **08.01.2014**
(21) Anmeldenummer: 12187157.8
(22) Anmeldetag: 04.10.2012
(51) Int. Cl.: F16K 11/048, F16K 31/06

(54) **Membranventil**

(30) Priorität: 02.07.2012 DE 102012211427
(71) Anmelder: Kuhnke Automation GmbH & Co. KG, 23714 Malente (DE)
(72) Erfinder: Kemkowski, Thomas, 23715 Braak (DE); Dummer, Till, 23714 Malente (DE)
(74) Vertreter: Grebner, Christian Georg Rudolf

(57) **Zusammenfassung**

Die Erfindung betrifft ein Ventil (1) zur Steuerung eines Fluids, mit einem vom Fluid getrennten Ventilantrieb (2), wobei der Ventilantrieb (2) eine Längsachse (3) aufweist, in deren Richtung eine Ventilstellung des Ventils (1) veränderbar ist, wobei eine Ventilkammer (4) vorgesehen ist, die mittels einer ersten Ventilmembran (30, 30') gegen den Ventilantrieb (2) abgedichtet ist. Die Erfindung ist dadurch weitergebildet, dass die erste Ventilmembran (30, 30') in einer ersten Ventilstellung auf einem in der Ventilkammer (4) angeordneten ersten Ventilsitz (5) abdichtend anliegt.

## Beschreibung

### Beschreibung

Die Erfindung betrifft ein Ventil zur Steuerung eines Fluids, mit einem vom Fluid getrennten Ventilantrieb, wobei der Ventilantrieb eine Längsachse aufweist, in deren Richtung eine Ventilstellung des Ventils veränderbar ist, wobei eine Ventilkammer vorgesehen ist, die mittels einer ersten Ventilmembran gegen den Ventilantrieb abgedichtet ist.

Entsprechende Ventile, die auch mediengetrennte Ventile genannt werden, dienen zur Steuerung eines Fluids, das aggressiv sein kann bzw. das möglichst nicht kontaminiert werden soll. Hierzu ist vorgesehen, dass ein möglichst kleines Volumen und eine möglichst kleine Oberfläche mit dem Fluid in Kontakt treten, wobei entsprechende Materialien mit dem Fluid in Kontakt treten sollen, die dem aggressiven Fluid standhalten können. Zudem kann es auch vorgesehen sein, beispielsweise in der Medizintechnik, das Ventil mehrfach zu benutzen, so dass dieses nach einer Benutzung sterilisiert werden soll. Hierzu sollten keine Toträume vorhanden sein, damit ein effizienter Spülvorgang zum Desinfizieren des Ventils möglich ist.

Es gibt grundsätzlich am Markt zwei verschiedene Grundprinzipien für 3/2-Wege-Ventile unter den mediengetrennten Ventilen. Beiden ist gemeinsam, dass eine translatorische Antriebsbewegung auf ein Element übertragen wird, so dass eine rotatorische Bewegung entsteht. Hierzu wird auf DE 196 00 816 A1 und DE 201 19 401 U1 verwiesen.

Bei 2/2-Wege-Ventilen der mediengetrennten Art gibt es beispielsweise Schlauch-Quetsch-Ventile, die einen hohen mechanischen Widerstand aufweisen.

Aus DE 100 39 066 A1 ist ein Ventil zur Regelung eines fluiden Mediums mit einem vom Medium getrennten Ventilantrieb, einem Ventileingang und einem Ventilausgang bekannt, wobei zwischen Ventileingang und Ventilausgang eine Ventilkammer mit einem Ventilgehäuse vorgesehen ist, wobei ein von dem Ventilantrieb betätigtes Ventilglied gezeigt ist, das mit einem in der Ventilkammer ausgebildeten Ventilsitz zur Durchflussmengenregelung zusammenwirkt. Zur langfristig leckfreien Abdichtung zwischen Ventilgehäuse und Ventilantrieb und Sicherstellung eines guten Regelverhaltens des Ventilantriebs ist das Ventilglied als ein die Ventilkammer gegenüber dem Ventilantrieb druckdicht trennender Faltenbalg ausgebildet und an diesem ein von dem Medium in der Ventilkammer beaufschlagter zweiter Faltenbalg angekoppelt, der so ausgebildet ist, dass er eine Differenzkraft kompensiert, die am ersten Faltenbalg beim Übergang vom Schließen zum Öffnen des Ventils durch das Medium verursacht wird. Dieses Ventil hat den Nachteil, dass aufgrund der Verwendung von Faltenbalgen eine sehr große Oberfläche und Toträume vorhanden sind, die einem effizienten Spülvorgang beispielsweise zum Desinfizieren entgegenstehen.

In DE 37 22 315 C2 ist ein Druckregelventil offenbart, das einen Ventilsitz eines Ventilgliedes aufweist, das als Ringschneide ausgebildet ist, die beim Aufsitzen im Wesentlichen nur eine Linienberührung ermöglicht.

Es ist Aufgabe der vorliegenden Erfindung, ein möglichst leichtgehendes Ventil zur Steuerung eines Fluids anzugeben.

Gelöst wird diese Aufgabe durch ein Ventil zur Steuerung eines Fluids, mit einem vom Fluid getrennten Ventilantrieb, wobei der Ventilantrieb eine Längsachse aufweist, in deren Richtung eine Ventilstellung des Ventils veränderbar ist, wobei eine Ventilkammer vorgesehen ist, die mittels einer ersten Ventilmembran gegen den Ventilantrieb abgedichtet ist, wobei die erste Ventilmembran in einer ersten Ventilstellung auf einem in der Ventilkammer angeordneten ersten Ventilsitz abdichtend anliegt.

Durch Vorsehen einer in Längsachse, d.h. translatorisch, bewegbaren ersten Ventilmembran, die durch den Ventilantrieb entsprechend wenigstens teilweise translatorisch bewegt wird, sowie das Vorsehen einer Ventilmembran, die in einer ersten Ventilstellung an einem in der Ventilkammer angeordneten ersten Ventilsitz abdichtend anliegt, ist erfindungsgemäß ein entsprechendes mediengetrenntes Ventil vorgesehen, das relativ leichtgängig ist. Dieses liegt insbesondere darin begründet, dass eine entsprechende, insbesondere flexible Membran vorgesehen ist, die nur wenigstens teilweise ausgelenkt werden muss, um eine abdichtende erste Ventilstellung einzunehmen.

Vorzugsweise ist in einer zweiten Ventilstellung die erste Ventilmembran von dem ersten Ventilsitz beabstandet und zudem eine zweite Ventilmembran vorgesehen, die in der zweiten Ventilstellung auf einem zweiten Ventilsitz abdichtend anliegt. Durch diese besonders bevorzugte Maßnahme ist ein mit noch weniger Bewegungskraft verstellendes Ventil möglich, da die Ventilmembranen bzw. die Oberflächen der Ventilmembranen, die mit dem Fluid in Kontakt stehen, so dimensioniert werden können, dass die durch das Fluid auf die Ventilmembranen ausgeübten Kräfte sich weitestgehend kompensieren.

Vorzugsweise ist hierzu ein Übertragungselement vorgesehen, mittels dessen die erste Ventilmembran und die zweite Ventilmembran simultan bewegbar sind oder bewegt werden. In diesem Fall sind die entsprechenden Elemente, mittels denen die Ventilmembranen in Längsachse des Ventilantriebs bzw. translatorisch bewegbar sind bzw. bewegt werden, miteinander verbunden bzw. einstückig.

Besonders bevorzugt ist eine Ausgestaltung, bei der der erste und der zweite Ventilsitz an gegenüberliegenden Enden der Ventilkammer angeordnet sind. Hierdurch ergibt sich ein sehr platzsparendes und sehr leicht verschiebbares Ventil.

Besonders bevorzugt ist es, wenn die erste Ventilmembran und die zweite Ventilmembran jeweils als Tellermembran ausgebildet sind. Hierdurch ist eine sehr kleine Oberfläche in Kontakt mit dem Fluid. Vorzugsweise sind die jeweiligen Tellermembranen in deren zentralen Bereich quer zu deren jeweiliger Erstreckung bewegbar oder werden entsprechend bewegt. Insbesondere wird hierbei ausgenutzt, dass zumindest ein ringförmiger Bereich der jeweiligen Tellermembran, der um einen Mittelpunkt der Tellermembran herum angeordnet ist, also zum zentralen Bereich gehört oder diesen umschließt, elastisch ausgebildet ist. Der Zentralbereich kann dann auch unelastisch ausgebildet sein, wobei eine elastische Ausbildung insbesondere für den Bereich sinnvoll ist, der mit dem zu der jeweiligen Membran gehörenden Ventilsitz in Kontakt tritt. Der Ventilsitz ist vorzugsweise als ringförmiger Ventilsitz ausgestaltet, wobei die Ebene des Ringes queraxial zu der Längsachse des Ventilantriebs angeordnet ist.

Besonders bevorzugt ist es, wenn die Ventilmembranen jeweils zwischen einer Außenwand der Ventilkammer und dem zu der jeweiligen Ventilmembran zugeordneten Ventilsitz angeordnet sind. Hierdurch ist durch kurze und wenig Kraft benötigende Wege ein Umschalten des Ventils möglich. Damit liegen einer linearen Abfolge entlang der Längsachse des Ventilantriebs eine erste Außenwand, die erste Ventilmembran, der erste Ventilsitz, der zweite Ventilsitz, die zweite Ventilmembran und eine zweite Außenwand. Die Ventilmembranen haben vorzugsweise die Ventilsitze zwischen sich angeordnet.

Wenn vorzugsweise das Übertragungselement außerhalb der Ventilkammer angeordnet ist, kann dieses aus einem beliebigen stabilen Material gefertigt sein und muss nicht im Wesentlichen inert gegen das Fluid sein, das mit dem Ventil gesteuert wird.

Wenn das Übertragungselement mit den Ventilmembranen als Einheit in der Ventilkammer angeordnet ist, ist ein sehr einfach herzustellendes Ventil ermöglicht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Schnittdarstellung durch ein erfindungsgemäßes Ventil,
- Fig. 2a): einen schematischen Schnitt durch ein erfindungsgemäßes Ventil in einer weiteren Ausführungsform,
- Fig. 2b): das Ventil aus Fig. 2a) in einer schematischen Schnittdarstellung um 90° gedreht,
- Fig. 3: eine dreidimensionale schematische Darstellung eines Teils eines erfindungsgemäßen Ventils.

In den Zeichnungen sind jeweils gleiche oder gleichartige Elemente und/oder Teile mit denselben Bezugsziffern versehen, so dass von einer erneuten Vorstellung jeweils abgesehen wird.

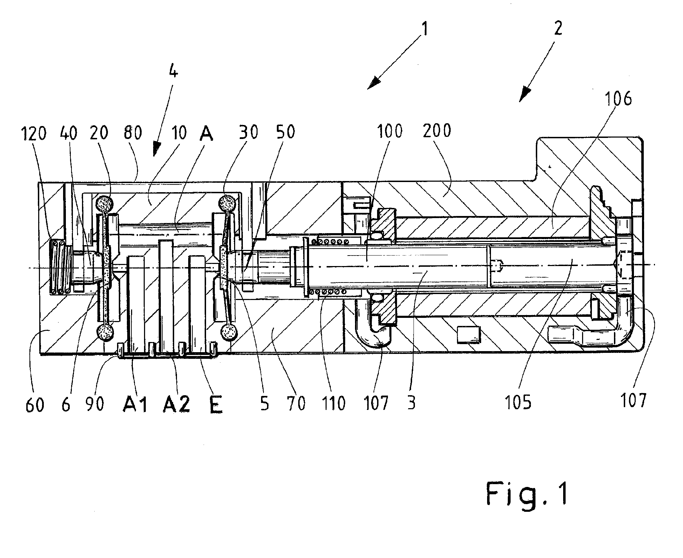

Fig. 1 zeigt schematisch ein erfindungsgemäßes Ventil in einer Schnittdarstellung. Das Ventil ist mit der Bezugsziffer 1 versehen. Dieses umfasst einen Ventilantrieb 2, der von dem zu steuernden Fluid getrennt ist. Die Trennung geschieht über eine Membran 30, die in das Ventilgehäuse 10 eingelassen ist und entsprechend das Ventilgehäuse 10 abdichtet, so dass kein Fluid in den Ventilantrieb 2 gelangen kann. In den Ausführungsbeispielen sind die erfindungsgemäßen Ausführungsformen als 3/2-Wege-Ventile dargestellt. Diese sind allerdings genauso gut als 2/2-Wege-Ventil möglich.

In dem Ventilgehäuse 10 befinden sich die Strömungskanäle, durch die das Arbeitsmedium bzw. das Fluid geführt wird. Über einen Eingang E kann Fluid in die Ventilkammer 4 des Ventilgehäuses 10 eingebracht werden und über die Ausgänge A1 und A2 ausgelassen werden. In der gezeigten Ventilstellung der Fig. 1 ist der Eingang E abgedichtet, d.h. es wird kein Fluid in die Ventilkammer 4 des Ventilgehäuses 10 eingelassen. Stattdessen sind die Strömungskanäle, die zu den Auslässen A1 und A2 führen, miteinander verbunden, da die Ventilmembran 20 nicht auf dem Ventilsitz 6 abdichtend anliegt. Auf der anderen Seite, d.h. gegenüberliegend zu dem zweiten Ventilsitz 6, ist der erste Ventilsitz 5, gegen den die Membran 30 abdichtend anliegt.

Auf den Stirnseiten des Ventilgehäuses 10 sind die Öffnungen bzw. Düsen durch den jeweiligen Ventilsitz 5 bzw. 6 geführt. Diese sind in einer Ebene gegenüberliegend angeordnet. Genauer gesagt sind diese sogar kollinear, d.h. in einer Flucht in diesem speziellen Ausführungsbeispiel dargestellt. Die beiden Stirnflächen des Gehäuses 10 bzw. der Ventilkammer 4 sind durch eine Bohrung A miteinander verbunden. Diese Bohrung dient als Arbeitskanal. Durch diese Verbindung herrscht an beiden Membranen 20 und 30 jeweils von der Innenseite der gleiche Fluiddruck. Durch entsprechend ungefähr gleich große Flächen der Membranen 20 und 30 bzw. vorzugsweise identisch große Flächen, findet ein Kraftausgleich statt.

Um nun das Ventil zu betätigen, ist ein Ventilantrieb 2 vorgesehen, der in diesem Fall magnetisch ausgebildet ist. Das Magnetsystem 200 umfasst einen in Längsachse 3 beweglichen Anker 100, der durch die Feder 110 gegen den ersten Ventilsitz 5 drückend ausgebildet ist und durch eine Spule 106 in die entgegengesetzte Richtung auslenkbar bzw. bewegbar ist. Es ist ferner ein Magnetkern 105 koaxial zu dem Anker 100 vorgesehen und ein Magnetjoch 107, um die Flusslinien zu bündeln und damit das Magnetfeld der Spule 106 zu konzentrieren.

Der Anker 100 ist mit einem Betätigungsstift 50 verbunden, der mit der Membran 30 verbunden ist oder in Wirkverbindung mit der Membran 30 bringbar ist. Der Betätigungsstift 50 ist mit einem U-förmigen Übertragungselement 80 verbunden, was eine einfache Montage ermöglicht. Alternativ kann das Übertragungselement 80 auch 0-förmig, d.h. geschlossen sein, um eine höhere Stabilität zu gewährleisten. Das Übertragungselement 80 ist außerhalb des Ventilgehäuses 10 angeordnet und ist auf der dem Betätigungsstift 50 gegenüberliegenden Seite mit einem Betätigungsstift 40 verbunden. Der Betätigungsstift 40 wirkt auf die Membran 20 ein. Durch eine translatorische Antriebsbewegung kann das Übertragungselement auf jeweils eine Membran Kraft ausüben und somit die dahinter liegende bzw. davor liegende Düse bzw. Öffnung an dem jeweiligen Ventilsitz 5 bzw. 6 abdichten. Die Betätigungsstifte 40, 50 können mit den jeweiligen Membranen formschlüssig verbunden sein. Es ist somit eine nahezu reibungsfreie Lagerung des Übertragungselementes 80 vorgesehen. Es ist ferner eine Feder 120 vorgesehen, die den Betätigungsstift 40 gegen die Membran 20 drückt. Die Federkraft der Federn 110 und/oder 120 ist vorzugsweise einstellbar.

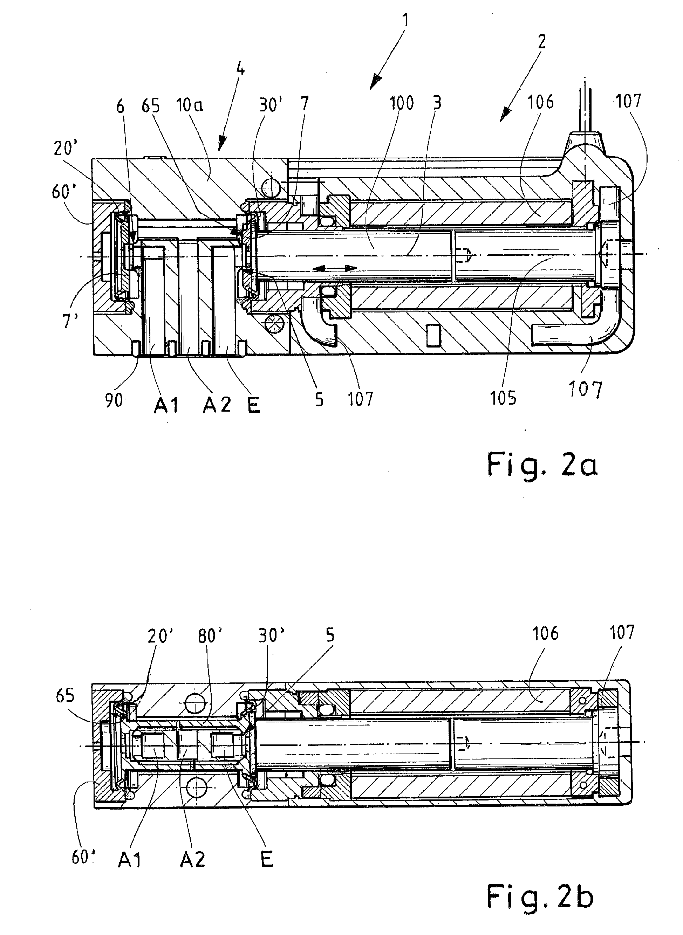

Fig. 2a) und Fig. 2b) zeigen eine alternative Ausführungsform des erfindungsgemäßen Ventils 1, wobei bezüglich gleicher oder ähnlicher Elemente die gleichen Bezugsziffern verwendet werden, wie in Fig. 1.

Fig. 2a) zeigt einen schematischen Schnitt durch ein entsprechendes erfindungsgemäßes Ventil 1 und Fig. 2b) zeigt einen Schnitt entlang der Längsachse 3 bzw. einer Ebene, die im Bereich der Längsachse 3 durch die Zeichenebene der Fig. 2a) hindurchreicht. Die Darstellung ist also um 90° gedreht.

Im Unterschied zur Ausführungsform gemäß Fig. 1 ist bei der Ausführungsform gemäß Fig. 2a) und 2b) ein Übertragungselement 80' vorgesehen, das nicht außerhalb des Ventilgehäuses 10 liegt wie in Fig. 1, sondern innerhalb des Ventilgehäuses 10a. Das Übertragungselement 80' ist also in Kontakt mit dem Fluid. Das Übertragungselement 80' endet sowohl auf der linken als auch auf der rechten Seite in der Ventilkammer 4 und ist am Randbereich mit einem flexiblen Material verbunden, das eine Abdichtung der jeweiligen Membran 20', 30' gegenüber dem Bereich außerhalb der Ventilkammer 4 bzw. des Ventilgehäuses 10a ermöglicht. Hierdurch ist eine sehr einfache Montagemöglichkeit gegeben. Es muss lediglich das Ventilgehäuse 10a von dem Ventilantrieb 2 abmontiert werden und der Deckel 60' muss abmontiert werden. Daraufhin kann die Einheit aus den Membranen 20', 30' sowie dem Übertragungselement 80' eingebracht werden und dann das Ventilgehäuse 10a an den Ventilantrieb 2 montiert und der Deckel 60' wieder eingebracht werden.

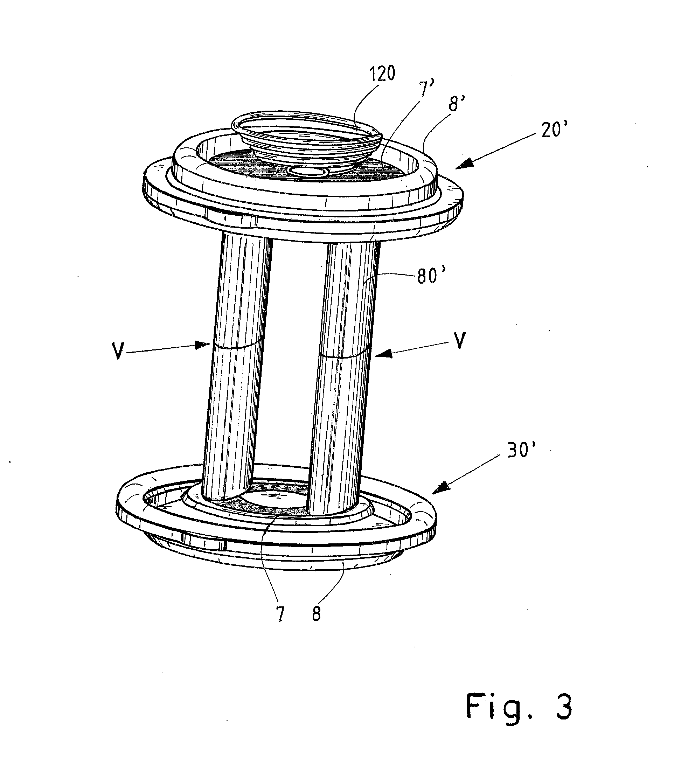

In Fig. 3 ist eine entsprechende Membraneinheit umfassend die Membran 20', das Übertragungselement 80' und die Membran 30', gezeigt. Das Übertragungselement 80' umfasst zwei Verbindungselemente, an deren Enden Ringelemente 7, 7' vorgesehen sind, die durch elastische Ringe 8, 8' abgegrenzt sind. Die Ringelemente 7, 7' zusammen mit den elastischen Ringen 8, 8' bilden die jeweiligen Membranen 20' bzw. 30'. Das Übertragungselement 80' umfassend die Sockelanteile 7 und 7' sind vorzugsweise aus dem gleichen Werkstoff gefertigt, um die Werkstoffvielfalt der medienberührenden Teile zu minimieren. Vorzugsweise besteht die in Fig. 3 gezeigte Membraneinheit aus zwei gleichen Membranelementen, deren Trennung in der Mitte der Verbindungselemente 80' vorgesehen ist. Diese können beispielsweise mit Steckverbindungen ineinander steckbar sein. Der Verbindungsbereich ist mit V angegeben.

Auf der den Ausgang A1 abdichtenden Membran 20' ist zum Abstützen am Deckel eine Stützwand 65 vorgesehen. In der Ausführungsform gemäß den Figuren 2a) und 2b) ist auf der gegenüberliegenden Seite die abstützende Wand durch den in Pfeilrichtung verschieblich gelagerten Anker 100 gegeben. Bei der Ausführungsform gemäß Fig. 1 ist die Stützwand durch die Betätigungsstifte 40 und 50 gegeben.

Die Ein- und Auslässe E, A1 und A2 können mit entsprechenden bekannten Anschlusselementen dichtend angebracht werden. Hierzu ist schematisch eine Dichtung 90 dargestellt. Es sind vier Dichtungen 90 vorgesehen, wobei allerdings nur eine mit Bezugszeichen versehen wurde.

Bei dem Ausführungsbeispiel gemäß Fig. 2a) und 2b) werden vorzugsweise die Membranelemente, die im Verbindungsbereich V miteinander verbunden werden, zunächst unverbunden von zwei Seiten in das Ventilgehäuse 10a eingebracht und im Verbindungsbereich V kraftschlüssig, formschlüssig und/oder stoffschlüssig zusammengefügt. Durch den durch die Membranflächen vorgesehenen Druckausgleich kann das Ventil 1 mit sehr geringem Kraftaufwand bzw. sehr geringer elektrischer Leistung geschaltet werden. Durch die lineare Anordnung der Anschlüsse hintereinander und auf einer Seite des Ventils 1 ist ein sehr effizienter Anschluss möglich. Der Antrieb selbst kann mechanisch oder elektromechanisch über einen Hubmagneten sein. Das Übertragungselement 80 bzw. 80' kann als optische Schaltstellungsanzeige genutzt werden. Durch Anordnung geeigneter Sensoren, die nicht dargestellt sind, ist eine elektronische Schaltstellungserfassung möglich. Auf diese Weise kann das Ventil als geregeltes oder gesteuertes Proportionalventil genutzt werden.

Die Funktion des Ventils 1 ist wie folgt. Der Ventilkörper bzw. das Ventilgehäuse 10 bzw. 10a weist gegenüberliegende Düsen bzw. Öffnungen auf, die mit den Membranen 20, 20', 30, 30' gegen ein Fluid abgedichtet werden. Durch den erfindungsgemäßen Aufbau kommen maximal zwei verschiedene Werkstoffe mit dem Fluid in Berührung. Das Ventil kann durch geeignete Auswahl der Werkstoffe beispielsweise für aggressive Medien oder Medien im medizinischen Bereich ausgelegt werden. Das Übertragungselement 80 bis 80' kann einteilig sein und unmittelbar mit den Membranen in Verbindung stehen oder mit einem oder zwei, vorzugsweise einstellbaren, Betätigungsstiften 40, 50 verbunden sein. Die Betätigungsstifte können zur Feineinstellung des Ventilweges mit Gewinden versehen sein und/oder formschlüssig oder kraftschlüssig befestigt sein. Vorzugsweise wird durch die Feder 110, die beispielsweise eine größere Federkraft aufweist als die Feder 120, eine der Düsen durch die Membran, die vorzugsweise wenigstens teilweise ein Elastomer umfasst, gedichtet. Der die Dichtung hervorrufende Teil der Membran ist vorzugsweise in der Membran integriert. Das Abdichten der der ersten Düse bzw. Öffnung gegenüberliegenden zweiten Düse bzw. Öffnung ist vorzugsweise auch federunterstützt. Dieses kann allerdings auch mechanisch oder über eine elektromechanische Kraft alleine oder aber durch andere Kräfte wie beispielsweise eine Eigenspannung der Membran erfolgen.

Der Antrieb des Ventils kann grundsätzlich auch durch Handbetätigung sein oder durch eine Pneumatik. Die Membranen 20, 20', 30, 30' übernehmen auch die Dichtfunktion zwischen dem Gehäuse 10 bzw. 10a und den vorgesehenen Deckeln 60, 60'. Durch Vorsehen einer rein translatorischen Bewegung werden die Kräfte zum Schalten des Ventils minimiert. Aufgrund der druckausgleichenden Flächen der Membranen, die vorzugsweise gleich groß sind, und die reibungsfreie Aufhängung des Übertragungselements 80 bzw. 80' treten nur Dichtkräfte auf. Die Reibung entfällt nahezu vollständig. Durch den Druckausgleich der beiden Membranen heben sich die Druckkräfte auf und es entfallen somit bei der Auslegung des Ventils diese auf die Membran wirkenden Kräfte.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Ventil
- 2: Ventilantrieb
- 3: Längsachse
- 4: Ventilkammer
- 5: erster Ventilsitz
- 6: zweite Ventilsitz
- 7,7': Ringelement
- 8, 8': elastischer Ring
- 10: Ventilgehäuse
- 10a: Ventilgehäuse
- 20, 20': Membran
- 30, 30': Membran
- 40: Betätigungsstift
- 50: Betätigungsstift
- 60, 60': Deckel
- 65: Stützwand
- 70: Deckel
- 80, 80': Übertragungselement
- 90: Dichtung
- 100: Anker
- 105: Kern
- 106: Spule
- 107: Joch
- 110: Feder
- 120: Feder
- 200: Magnetsystem
- E: Eingang
- A1: Ausgang
- A2: Ausgang
- A: Arbeitskanal
- V: Verbindungsbereich

## Patentansprüche

1. Ventil (1) zur Steuerung eines Fluids, mit einem vom Fluid getrennten Ventilantrieb (2), wobei der Ventilantrieb (2) eine Längsachse (3) aufweist, in deren Richtung eine Ventilstellung des Ventils (1) veränderbar ist, wobei eine Ventilkammer (4) vorgesehen ist, die mittels einer ersten Ventilmembran (30, 30') gegen den Ventilantrieb (2) abgedichtet ist, **dadurch gekennzeichnet, dass** die erste Ventilmembran (30, 30') in einer ersten Ventilstellung (Fig. 1, Fig. 2a, Fig. 4) auf einem in der Ventilkammer (4) angeordneten ersten Ventilsitz (5) abdichtend anliegt.

2. Ventil (1) nach Anspruch 1, **dadurch gekennzeichnet, dass** in einer zweiten Ventilstellung die erste Ventilmembran (30, 30') von dem ersten Ventilsitz (5) beabstandet ist und dass eine zweite Ventilmembran (20, 20') vorgesehen ist, die in der zweiten Ventilstellung auf einem zweiten Ventilsitz (6) abdichtend anliegt.

3. Ventil (1) nach Anspruch 2, **dadurch gekennzeichnet, dass** ein Übertragungselement (80, 80') vorgesehen ist, mittels dem die erste Ventilmembran (30, 30') und die zweite Ventilmembran (20, 20') simultan bewegbar sind oder bewegt werden.

4. Ventil (1) nach Anspruch 2 oder 3, **dadurch gekennzeichnet, dass** der erste und der zweite Ventilsitz (5, 6) an gegenüberliegenden Enden der Ventilkammer (4) angeordnet sind.

5. Ventil (1) nach einem der Ansprüche 2 bis 4, **dadurch gekennzeichnet, dass** die erste Ventilmembran (30, 30') und die zweite Ventilmembran (20, 20') jeweils als Tellermembran ausgebildet sind.

6. Ventil (1) nach Anspruch 5, **dadurch gekennzeichnet, dass** die jeweiligen Tellermembranen (20, 20', 30, 30') in deren zentralen Bereich quer zu deren jeweiliger Erstreckung bewegbar sind oder bewegt werden.

7. Ventil (1) nach einem der Ansprüche 2 bis 6, **dadurch gekennzeichnet, dass** die Ventilmembranen (20, 20', 30, 30') jeweils zwischen einer Außenwand (60, 65, 70) der Ventilkammer (4) und dem zu der jeweiligen Ventilmembran (20, 20', 30, 30') zugeordneten Ventilsitz (5, 6) angeordnet sind.

8. Ventil (1) nach einem der Ansprüche 3 bis 7, **dadurch gekennzeichnet, dass** das Übertragungselement (80) außerhalb der Ventilkammer (4) angeordnet ist.

9. Ventil (1) nach einem der Ansprüche 3 bis 7, **dadurch gekennzeichnet, dass** das Übertragungselement (80') mit den Ventilmembranen (20', 30') als Einheit in der Ventilkammer (4) angeordnet ist.
